(19) Europäisches Patentamt

European Patent Office

Office européen des brevets

(11) Numéro de publication: **0 407 265 A1**

(12) **DEMANDE DE BREVET EUROPEEN**

(21) Numéro de dépôt: 90401845.4

(22) Date de dépôt: 27.06.90

(51) Int. Cl.⁵: **B60N 2/22**

(30) Priorité: 03.07.89 FR 8908891

(43) Date de publication de la demande:
09.01.91 Bulletin 91/02

(84) Etats contractants désignés:
AT BE DE DK ES GB IT NL SE

(71) Demandeur: **ETS. COUSIN FRERES**
**Le Bois de Flers**
**F-61101 Flers Cédex(FR)**

(72) Inventeur: **Droulon, Georges**
**Rue de la Garenne, St Georges des**
**Groseillers**
**F-61100 Flers(FR)**
Inventeur: **Romagne, Alain**
**La Chesnaie**
**F-61100 Aubusson(FR)**

(74) Mandataire: **Madeuf, Claude Alexandre Jean**
**et al**
**CABINET MADEUF 3, avenue Bugeaud**
**F-75116 Paris(FR)**

(54) **Dispositif de rattrapage des jeux angulaires sur des mécanismes utilisés dans des sièges, en particulier, d'automobiles.**

㊵ Dispositif de rattrapage des jeux angulaires sur des mécanismes d'articulation utilisés dans des sièges en particulier d'automobiles constitués particulièrement par des mécanismes à satellite irréversible (train épicycloïdal) reliés l'un à l'autre par une barre de liaison, caractérisé en ce que la barre de liaison (10, 11) présente sur l'une de ses parties un organe à dentures (1, 2) soumis à l'action d'un ressort (20) qui lorsque la barre de liaison est en place entre les deux cames des mécanismes d'articulation provoque une rotation de ces cames et des satellites y afférants pour compenser les jeux de fabrication et de montage afin d'éviter tout déplacement intempestif par torsion du dossier du siège considéré.

FIG. 1

## DISPOSITIF DE RATTRAPAGE DES JEUX ANGULAIRES SUR DES MÉCANISMES UTILISÉS DANS DES SIÈGES, EN PARTICULIER, D'AUTOMOBILES

Dans les sièges de véhicules, plus spécialement automobiles, il est maintenant courant de mettre en place, entre l'armature de l'assise et l'armature du dossier, des mécanismes ou ferrures permettant de faire varier l'inclinaison du dossier par rapport à l'assise. On peut également utiliser ces mécanismes pour le réglage de l'assiette de l'assise et, dans certains cas, pour le réglage des appui-tête sur la partie supérieure des dossiers de sièges.

Ces mécanismes, qui utilisent différents systèmes de réglage et de blocage, sont, en général, dits articulations continues car ils emploient des mécanismes à satellite irréversible (train épicycloïdal) qui sont bloqués automatiquement dès que l'on a réglé le siège en faisant tourner, par l'intermédiaire soit d'un bouton de manoeuvre, soit d'un moteur, la commande assurant la rotation du mécanisme.

Cependant, ces articulations à satellite, dites continues, présentent toutes l'inconvénient que, malgré une fabrication extrêmement soignée, il existe de légers jeux dans les dentures, dans le montage de chaque came de manoeuvre et étant donné qu'il faut deux mécanismes, un de chaque côté du dossier et, de ce fait, la partie supérieure du dossier est légèrement mobile suivant un angle faible mais visible donc critiquable, ce que refusent systématiquement les conducteurs d'automobiles.

L'emploi de ces mécanismes, dits articulations continues, présente cependant l'avantage d'être aisé , bon marché et donc on a cherché différents moyens pour éviter ou tout au moins rattraper les jeux des deux mécanismes montés en parallèle afin d'assurer au dossier, à l'assise etc., une position stable sans "ballottement" nuisible à l'esthétique et au confort du passager.

La présente invention tend à remédier à cette difficulté en créant une tige ou barre de liaison à rattrapage de jeu entre les deux mécanismes, tige ou barre de liaison nécessaire au fonctionnement concommitant des mécanismes et assurant en même temps une bonne stabilité de ces mécanismes sans augmenter le prix de revient de l'ensemble car la réalisation de la tige ou barre de liaison est simple, peu coûteuse et d'un montage extrêmement facile et dans certains cas, montés sur machine automatique.

Conformément à l'invention, le dispositif de rattrapage des jeux angulaires sur des mécanismes d'articulation utilisés dans des sièges en particulier d'automobiles constitués particulièrement par des mécanismes à satellite irréversible (train épicycloïdal) reliés l'un à l'autre par une barre de liaison est caractérisé en ce que la barre de liaison présente sur l'une de ses parties un organe à dentures soumis à l'action d'un ressort qui, lorsque la barre de liaison est en place entre les deux cames des mécanismes d'articulation, provoque une rotation de ces cames et des satellites y afférents pour compenser les jeux de fabrication et de montage afin d'éviter tout déplacement intempestif par torsion du dossier du siège considéré.

Suivant une autre caractéristique de l'invention, le dispositif de rattrapage des jeux angulaires sur des mécanismes utilisés dans des sièges en particulier d'automobiles, constitués particulièrement par des mécanismes à satellite irréversible (train épicycloïdal) reliés l'un à l'autre par une barre de liaison, est caractérisé en ce qu'il est constitué par deux segments de tube présentant chacun, à leur extrémité libre, une conformation, l'autre extrémité étant engagée sur des prolongements cylindriques cannelés solidaires de crabots mâle et femelle comportant chacun une dent pour former un embrayage à dent de loup, le crabot mâle étant prolongé, côté intérieur, par un élément cylindrique pénétrant dans une cavité centrale percée dans le crabot femelle puis les tubes comportent chacun des goupilles traversantes servant de points de fixation à un ressort hélicoïdal centré sur les crabots mâle et femelle assurant, lorsque la tige de liaison ainsi constituée est en place entre les cames des mécanismes à satellite irréversible, un rattrapage des jeux de ces cames, des satellites et des dentures des mécanismes par rotation du ressort qui transmet son effort par les goupilles traversantes aux conformations terminant les tubes.

Suivant une autre particularité de l'invention, une fourche-étrier maintenant normalement le ressort sous tension du fait que cette fourche-étrier coopère avec les emplacements prévus sur les tubes dans leur zone médiane se trouve retirée après montage et libère donc la tension du ressort pour le rattrapage des jeux.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une élévation longitudinale, partie en coupe, de la barre de rattrapage de jeux angulaires sur articulation dite continue.

La fig. 2 est une coupe suivant la ligne II-II de la fig. 1.

La fig. 3 est une coupe suivant la ligne III-III de la fig. 1.

La fig. 4 est une coupe suivant la ligne IV-IV de la fig. 1.

La fig. 5 est une coupe suivant la ligne V-V de la fig. 1.

La fig. 6 montre, en élévation, l'un des éléments de la tige pendant son montage.

La fig. 7 est une élévation latérale d'un des éléments de la tige.

La fig. 8 est une élévation, partie en coupe, des éléments correspondant à la fig. 7.

La fig. 9 est une élévation partielle, partie en coupe, d'une partie de tige montée sur le crabot mâle.

La fig. 10 est une vue en plan correspondant à la fig. 9.

La fig. 11 est une élévation latérale du crabot mâle.

La fig. 12 est une vue de face du crabot mâle suivant la ligne XII-XII de la fig. 11.

La fig. 13 est une élévation latérale, partie arrachée, du crabot femelle.

La fig. 14 est une vue de face du crabot femelle prise suivant la ligne XIV-XIV de la fig. 13.

La fig. 15 est une élévation latérale d'une demi-tige constituée par un tube conformé.

La fig. 16 est une vue de face suivant la ligne XVI-XVI de la fig. 15.

La fig. 17 est une coupe-élévation longitudinale d'une variante du dispositif de rattrapage des jeux angulaires pour des mécanismes d'articulation.

La fig. 18 est une vue de face prise sensiblement suivant la flèche F3 de la fig. 17.

La fig. 19 est un schéma de fonctionnement.

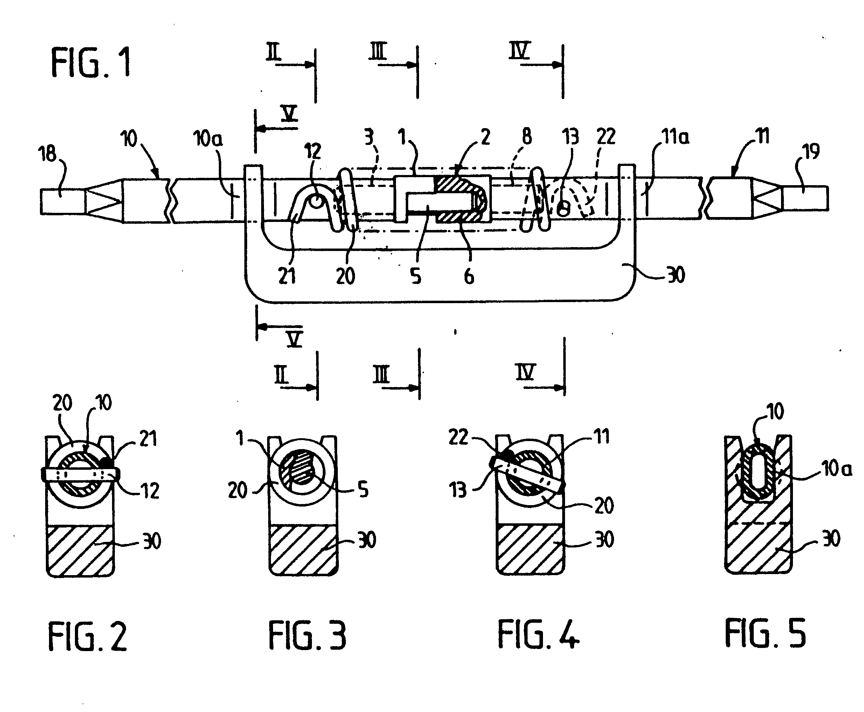

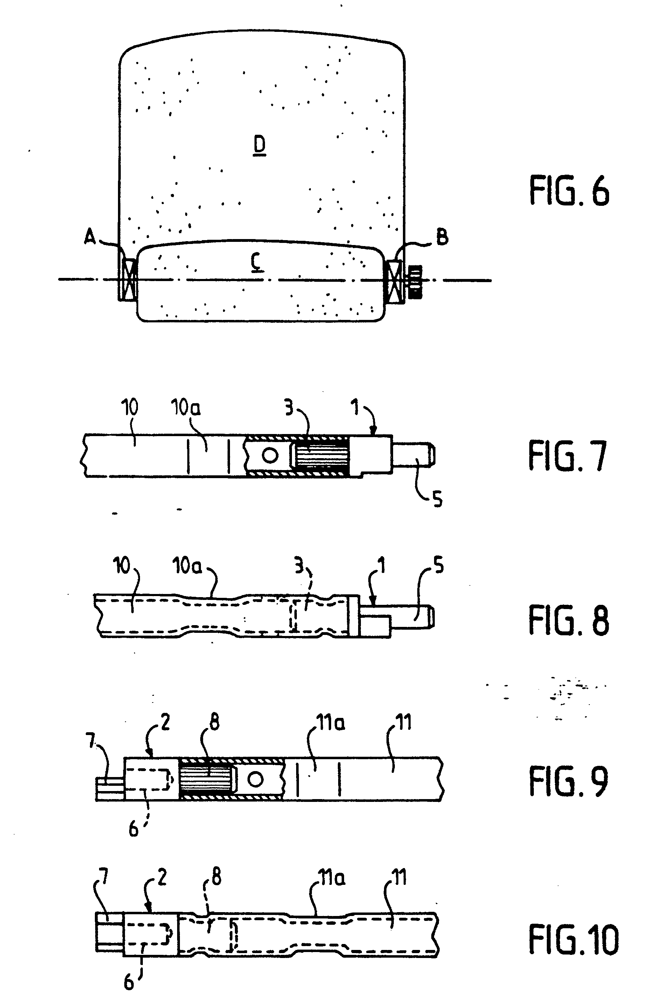

A la fig. 1, on a représenté la partie centrale partiellement coupée des crabots mâle et femelle 1, 2 (voir également à la fig. 7). Par crabots, on entend un genre de dents de loup mâle-femelle.

Le crabot mâle 1 est constitué par une tige 3 qui est cannelée et qui aboutit à une dent 4 concentrique à la tige 3 et concentrique également à un prolongement cylindrique 5. Ce dernier est destiné à pénétrer dans une cavité 6 percée au centre d'une dent cylindrique 7 du crabot femelle 2 qui se termine, comme pour le crabot mâle 1, par une tige 8 cannelée.

En se reportant à la fig. 1, on constate que, lorsque les crabots mâle et femelle sont en place, les dentures sont en prise et les tiges cannelées 3 et 8 sont dans le prolongement l'une de l'autre et peuvent donc être revêtues chacune par des tubes 10, 11 normalement cylindriques et qui présentent chacun dans leur zone médiane des goupilles traversantes 12, 13 qui se trouvent verrouillées dans les trous percés dans ces tubes 10, 11.

Il y a lieu de remarquer que les tubes 10, 11 présentent dans leur zone médiane 10a, 11a un aplatissement 16 (voir fig. 5) dont le rôle sera expliqué plus loin.

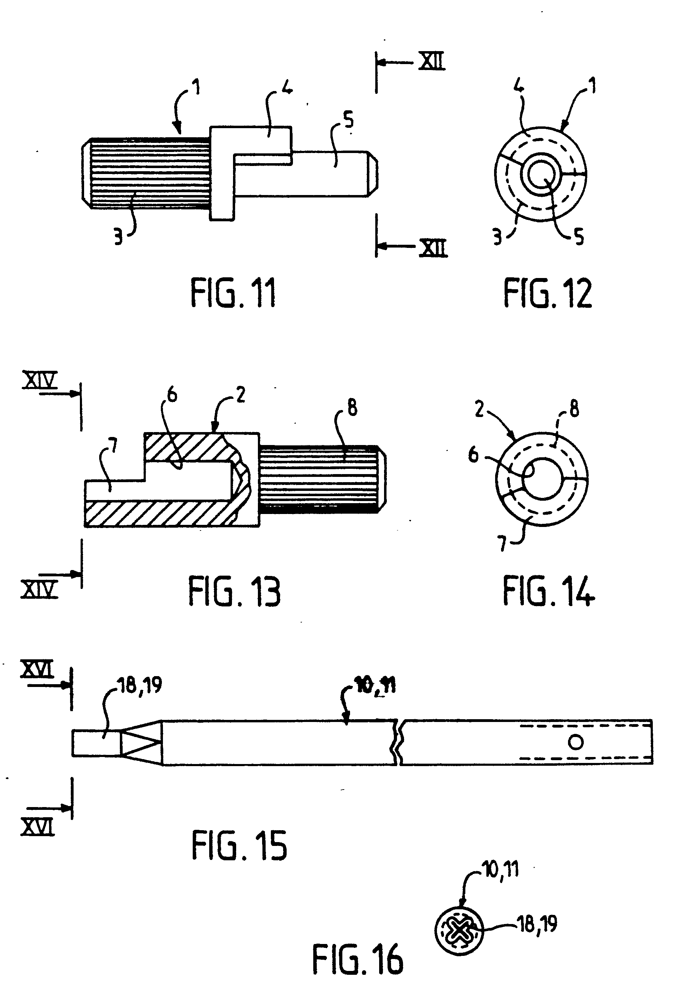

De plus, les tubes 10, 11 se terminent par des conformations 18, 19 à section en croix (voir fig. 16) destinées à pénétrer dans l'évidement central de commande de chaque ferrure.

Finalement, à la fig. 1, on constate qu'un ressort hélicoïdal 20 est placé entre les goupilles traversantes 12, 13 de façon que l'une des extrémités 21 du ressort 20 prenne appui sur la goupille 12 tandis que l'autre extrémité 22 du ressort 20 ne soit pas en contact avec la goupille traversante 13 de manière que lors du montage du tube de liaison à rattrapage de jeux, lorsque les extrémités 18, 19 sont en place à l'intérieur des cames de commande de chaque articulation gauche droite du siège, il se produise une torsion légère du ressort 20 puisque ce dernier a été maintenu en position d'extension par une fourche-étrier 30 dont les branches sont introduites sur les sections 16 aplaties (voir fig. 5).

Ainsi, il se produit une légère rotation en sens inverse des deux tubes 10, 11, ce qui provoque une légère rotation des cames d'entraînement des articulations, suivant un angle faible. Ainsi, les dentures de chaque satellite double de chaque articulation viennent en contact avec les dentures des flasques fixe et mobile de chaque articulation A, B placée entre l'assise C et le dossier D du siège considéré (voir fig. 6) en réduisant ainsi à 0 les jeux des dentures inévitables lors de la fabrication des satellites et des dentures des flasques.

Ainsi, le jeu angulaire prévu à l'origine dans chaque came est complètement rattrapé de même que les jeux des dentures et des paliers de centrage. On peut ainsi constater que ces jeux étant supprimés, la sensation de léger ballonnement en haut du dossier D considéré a disparu, ce qui est le but recherché.

Du fait de sa conception et de son montage, le tube de liaison à rattrapage de jeu permet donc un montage rapide sans difficulté de l'organe de jonction placée entre les deux articulations A, B en permettant ainsi soit à l'aide d'une seule commande manuelle, soit à l'aide d'un moteur électrique, de régler à la volonté de l'utilisateur, la position du dossier D par rapport à l'assise C.

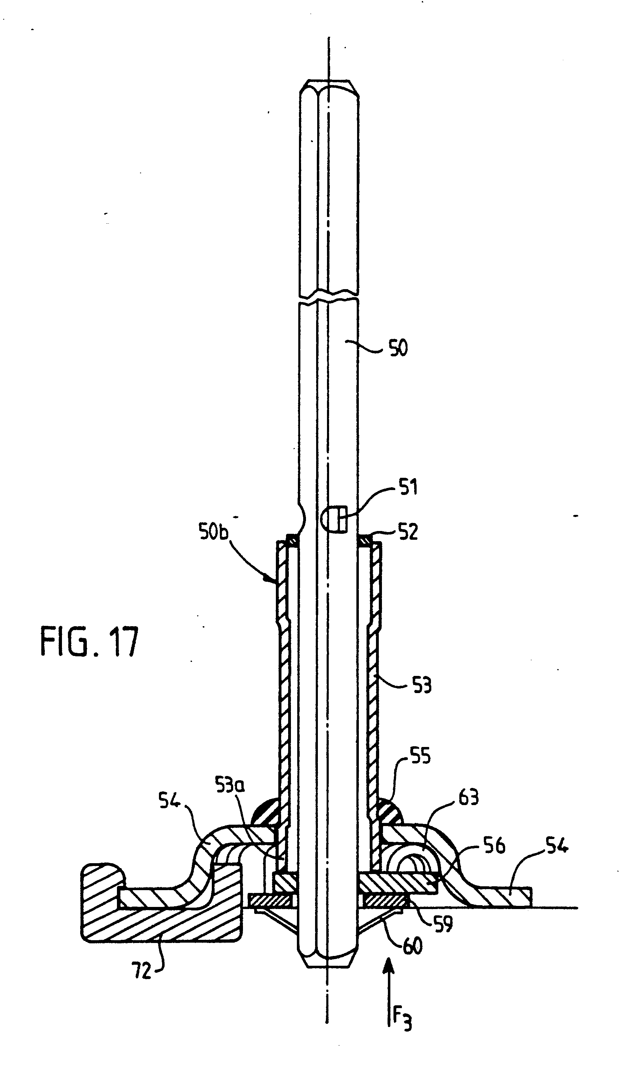

La fig. 17 est un plan, partie en coupe, montrant une deuxième forme de réalisation du dispositif de rattrapage des jeux angulaires qui est constitué principalement par une barre carrée de liaison 50 présentant, à l'une de ses extrémités, un ergot 51 destiné à servir de butée à une rondelle 52 venant se placer sur l'une des extrémités d'un tube-guide 53 qui est évasé dans sa zone médiane puis plus étroit vers son autre extrémité 53a pour recevoir une plaquette porte-bouton 54 conformée en forme de coupelle. La jonction de la plaquette porte-bouton en forme de coupelle 54 avec le tube-guide 53 est réalisée par une soudure 55.

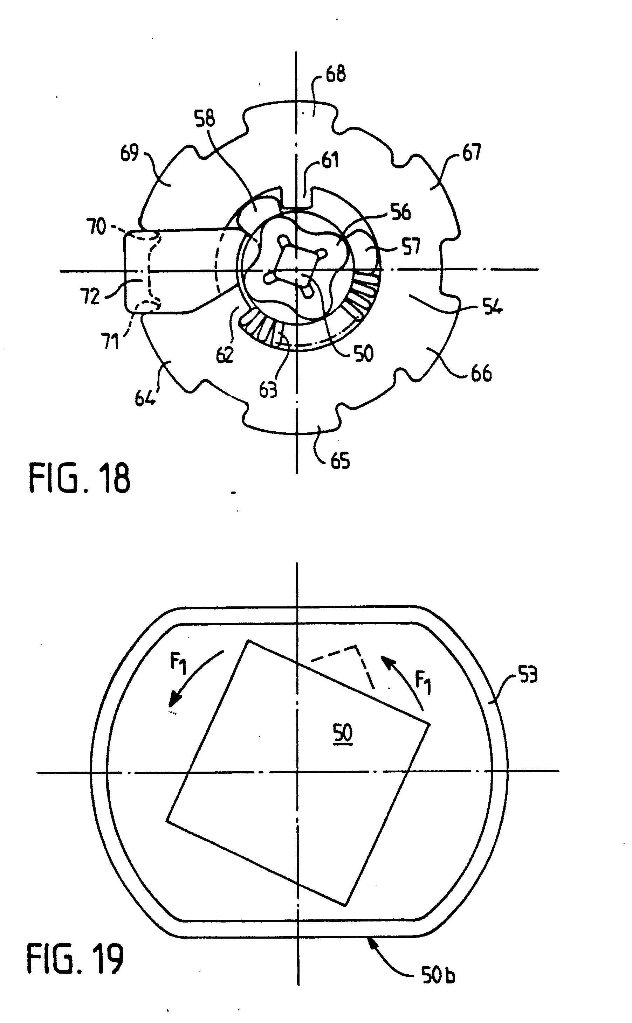

Comme on peut s'en rendre compte à la fig. 17, le tube-guide 53, par son extrémité 53a légèrement plus évasée, dépasse à l'intérieur de la plaquette porte-bouton 54 de façon à servir de butée à une pièce d'entraînement 56 (voir fig. 18) de forme générale circulaire mais présentant deux protubérances 57, 58 formant came disposées à 120° l'une de l'autre.

La pièce d'entraînement 56 est maintenue par une grille de maintien 59 et un verrou grille 60 comme cela est visible à la fig. 17.

Finalement et comme on peut s'en rendre compte à la fig. 18 la plaquette porte-bouton en coupelle 54 présente en son centre deux doigts 61, 62 décalés également de 120° et qui servent de butée à la protubérance 58 et pour le doigt 62 forme butée pour un ressort de compression 63 dont l'autre extrémité est en butée contre la protubérance 57. Il y a lieu de remarquer également que la bordure extérieure de la coupelle 54 est dentelée en 64, 65, 66, 67, 68, 69 et présente des découpes particulières 70, 71 pour recevoir un cavalier 72 formant verrou-butée et qui est amovible comme cela est décrit plus loin. Les dentelures 64 à 69 servent également et d'une manière usuelle à la fixation du bouton de manoeuvre qui commande, par l'intermédiaire de la tige carrée de liaison 50, les deux articulations qui sont placées l'une en bout de ce carré de liaison 50 et l'autre dans la zone 50b en avant de l'ergot 51.

En effet, lorsque les articulations du dossier sont montées, on peut automatiquement mettre en place la barre formée par le carré de liaison 50 par introduction de ce carré dans les trous prévus à cet effet au centre des cames des deux mécanismes d'articulation du dossier du siège considéré.

Lorsque cette opération est effectuée, on peut enlever alors le verrou-butée 72 qui est le plus souvent réalisé en matière plastique et comme le ressort 63 a été bandé lors de sa mise en place entre le doigt 62 et la protubérance 57, ce ressort se débande légèrement, fait effectuer à l'une des cames une rotation (voir fig. 19) dans le sens de la flèche F1, rotation de 40 à 50° en général de 45°, ce qui provoque le mouvement en rotation des deux cames de façon à ce que celles-ci compensent les jeux de fabrication et de montage et les satellites, qui leur sont solidaires en tournant également, compensent les jeux et les tolérances de fabrication des dentures.

Ce mouvement a donc pour effet que les mécanismes d'articulation étant bloqués légèrement, les jeux vers l'arrière sur l'un des côtés du siège et sur l'avant sur l'autre côté du siège sont compensés et qu'ainsi en considérant que l'armature du dossier est solidaire de cette barre de jonction, le dossier n'a plus de jeu de débattement nuisible à un bon confort du passager.

Cet ensemble est simple aussi bien à fabriquer qu'à monter puisqu'on peut le faire sur machine automatique. Le prix de revient de ce compensateur de jeu d'articulation est faible et répond parfaitement aux caractéristiques demandées par les constructeurs.

Il y a lieu de signaler que la barre de liaison 50, la pièce d'entraînement 56, la coupelle 54 et les différentes autres pièces sont réalisées en métal courant ne nécessitant aucun traitement de surface et le montage de cette barre de liaison ne présente aucune difficulté.

La description qui précède a été faite sur la base de mécanismes d'articulation d'un dossier mais le montage est le même pour les mécanismes d'articulation montés sur les rehausses d'assise de siège utilisant les mêmes mécanismes d'articulation.

**Revendications**

1 - Dispositif de rattrapage des jeux angulaires sur des mécanismes d'articulation utilisés dans des sièges en particulier d'automobiles constitués particulièrement par des mécanismes à satellite irréversible (train épicycloïdal) reliés l'un à l'autre par une barre de liaison, caractérisé en ce que la barre de liaison (10, 11, 50) présente sur l'une de ses parties un organe à dentures (1, 2, 56) soumis à l'action d'un ressort (20, 63) qui lorsque la barre de liaison est en place entre les deux cames des mécanismes d'articulation provoque une rotation de ces cames et des satellites y afférents pour compenser les jeux de fabrication et de montage afin d'éviter tout déplacement intempestif par torsion du dossier du siège considéré.

2 - Dispositif de rattrapage des jeux angulaires sur des mécanismes utilisés dans des sièges en particulier d'automobiles, constitués particulièrement par des mécanismes à satellite irréversible (train épicycloïdal) reliés l'un à l'autre par une barre de liaison suivant la revendication 1, caractérisé en ce qu'il est constitué par deux segments de tube (10, 11) présentant chacun, à leur extrémité libre, une conformation (18, 19), l'autre extrémité étant engagée sur des prolongements cylindriques (3, 8) cannelés solidaires de crabots mâle et femelle (1, 2) comportant chacun une dent (4, 7) pour former un embrayage à dent de loup, le crabot mâle (1) étant prolongé, côté intérieur, par un élément cylindrique (5) pénétrant dans une cavité centrale (6) percée dans le crabot femelle (2) puis les tubes (10, 11) comportent chacun des goupilles traversantes (12, 13) servant de points de fixation à un ressort hélicoïdal (20) centré sur les crabots mâle et femelle (1, 2) assurant, lorsque la tige de liaison ainsi constituée est en place entre les cames des mécanismes à satellite irréversible, un rattrapage des jeux de ces cames, des satellites et des dentures des mécanismes par compression du ressort (20) qui transmet son effort par les goupilles traversantes (12, 13) aux conformations (18, 19) terminant les tubes (10, 11).

3 - Dispositif suivant la revendication 1, caractérisé en ce qu'une fourche-étrier (30) maintenant normalement le ressort (20) sous tension du fait que cette fourche-étrier (30) coopère avec les emplacements (16) prévus sur les tubes (10, 11) dans leur zone médiane (10a, 11a) se trouve retirée après montage et libère donc la tension du ressort (20) pour le rattrapage des jeux.

4 - Dispositif suivant la revendication 1, caractérisé en ce que les extrémités (18, 19) des tubes (10, 11) reçoivent une conformation en croix pour faciliter leur pénétration dans le trou prévu au centre de chaque came du mécanisme à satellite irréversible considéré.

5 - Dispositif suivant la revendication 1, caractérisé en ce que la barre de liaison (50) est constituée par une barre à section carrée présentant, à l'une de ses extrémités, un ergot (51) maintenant une rondelle (52) sur l'extrémité d'un tube-guide (53) fixé par soudure à une coupelle (54) formant support du bouton de manoeuvre, cette coupelle présentant en son centre deux doigts (61, 62) disposés sensiblement à 120° l'un de l'autre pour maintenir l'un un cavalier (72) bloquant l'une des protubérances (58) de la pièce d'entraînement (56) tandis que l'autre protubérance (57) de cette même pièce d'entraînement sert de butée à l'une des extrémités du ressort de compression (53) dont l'autre extrémité est placée contre l'autre doigt (62) inférieur de la coupelle (54), cet ensemble étant maintenu côté extérieur c'est-à-dire côté du bouton de manoeuvre par une grille de maintien (59) et un verrou grille (60).

6 - Dispositif suivant la revendication 4, caractérisé en ce que le cavalier (72) réalisé le plus souvent en matière plastique est fixé sur le pourtour extérieur de la coupelle (54) par engagement dans des découpes (70, 71).

FIG. 1

FIG. 2

FIG. 3

FIG. 4

FIG. 5

EP 0 407 265 A1

FIG. 6

FIG. 7

FIG. 8

FIG. 9

FIG.10

FIG. 11

FIG. 12

FIG. 13

FIG. 14

FIG. 15

FIG. 16

8

**FIG. 17**

FIG. 18

FIG. 19

Office européen
des brevets

# RAPPORT DE RECHERCHE EUROPEENNE

Numero de la demande

EP    90 40 1845

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-3129672 (PRIVATES)<br>* colonne 3, ligne 35 - page 4, ligne 51; figures 1-2 *<br>--- | 1, 2 | B60N2/22 |
| A | WO-A-8002677 (PRIVATES)<br>* page 5, ligne 12 - page 8, ligne 14; figures 1-9 *<br>--- | 1, 2 | |
| A | FR-A-2391679 (KEIPER)<br>* page 4, ligne 4 - page 6, ligne 7; figures 1-4 *<br>----- | 1, 2, 4 | |

|  | DOMAINES TECHNIQUES RECHERCHES (Int. Cl.5) |
|---|---|
|  | B60N<br>G05G<br>F16H |

Le présent rapport a été établi pour toutes les revendications

| Lieu de la recherche | Date d'achèvement de la recherche | Examinateur |
|---|---|---|
| LA HAYE | 24 AOUT 1990 | HORVATH R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)